# EUROPÄISCHE PATENTANMELDUNG

(11) **EP 4 803 230 A1**
(43) Veröffentlichungstag der Anmeldung: **09.09.2026**
(21) Anmeldenummer: 25161281.8
(22) Anmeldetag: 03.03.2025
(51) Int. Cl.: B23B 31/26, B23B 31/107

(54) **SPANNSYSTEM UND DAS SPANNSYSTEM ENTHALTENDES BEARBEITUNGSSYSTEM**

(71) Anmelder: Fischer AG Präzisionsspindeln, 3360 Herzogenbuchsee (CH)
(72) Erfinder: Iseli, Elia, 3634 Thierachern (CH); Fernández, Tom, 4553 Subingen (CH)
(74) Vertreter: Hepp Wenger Ryffel AG

(57) **Zusammenfassung**

Offenbart ist ein Spannsystem (11) zum Einspannen eines Werkzeughalters (12) oder eines Werkstückhalters an einer um eine Längsachse (L) antreibbaren Werkzeugspindel (13) bzw. Werkstückspindel, enthaltend mindestens zwei, zumindest teilweise in radialer Richtung (R) bewegliche Spannsegmente (1) zum Einspannen eines Werkzeugs bzw. Werkstücks an einer Welle (4) der Werkzeugspindel (13) bzw. der Werkstückspindel, wobei die Spannsegmente (1) jeweils mindestens eine erste Spann- und Führungsfläche (14) aufweisen, einen Zugbolzen (2) mit mindestens einer ersten Gegenspannfläche (15), welche derart auf die ersten Spann- und Führungsflächen (14) abgestimmt ist, dass eine Bewegung des Zugbolzens (2) entlang der Längsachse (L) in einer Zugrichtung (Z) eine Bewegung der Spannsegmente (1) in der radialen Richtung (R) nach aussen bewirkt. Die Spannsegmente (1) weisen jeweils eine zweite Spann- und Führungsfläche (16) und das Spannsystem (11) eine Führungshülse (3) mit mindestes einer sie in der radialen Richtung (R) durchdringenden Öffnung (18) auf, durch welche die Spannsegmente (1) zumindest in einer Spannstellung hindurchgreifen und welche mindestens eine Gegenspann- und Gegenführungsfläche (17) definiert, welche derart auf die zweiten Spann- und Führungsflächen (16) abgestimmt ist, dass sie die Spannsegmente (1) parallel zur Längsachse (L) einspannt, insbesondere in der Zugrichtung (Z).

## Beschreibung

Die vorliegende Erfindung befasst sich mit Spannsystemen und das Spannsystem enthaltenden Bearbeitungssystemen. Derartige Systeme werden zum Einspannen eines Werkzeughalters oder eines Werkstückhalters an einer um eine Längsachse antreibbaren Werkzeugspindel bzw. Werkstückspindel verwendet.

Das Dokument DE 42 31 959 A1 offenbart eine Werkzeugspann- und -lösevorrichtung für eine Werkzeugmaschine. Diese verfügt über eine Zugstange und schwenkbar gelagerte Spannsegmente. Wird die Zugstange in axialer Richtung bewegt, so werden die Spannsegmente über eine Auflaufschräge eines Spreizkörpers in eine Spannlage bewegt, in der sich eine Stirnfläche eines Schenkels des Spannsegments gegen eine Schrägfläche eines Hohlschaftkegels legt.

Im Dokument DE 102 41 860 A1 wird ein Exzenterspanner zum Spannen von Hohlschaftkegel-Werkzeugen offenbart. Dieser weist Spannbacken auf, die bei axialer Bewegung einer Zugstange radial nach aussen bewegt werden.

Die im Dokument DE 10 2005 015 787 A1 beschriebene Exzenterspannvorrichtung enthält ebenfalls Spannbacken, die bei axialer Bewegung einer Zugstange in radialer Richtung bewegt werden.

Eine ähnliche Konstruktion ist im Dokument DE 10 2007 043 953 A1 offenbart. Auch hier sind radial bewegliche Spannbacken vorhanden.

Allen diesen bekannten Systemen wohnt der Nachteil inne, dass der Aufbau komplex, die Anzahl der Einzelteile gross, die Montage aufwendig und die erreichbare Wuchtgüte gering sind.

Es ist eine Aufgabe der vorliegenden Erfindung, die Nachteile aus dem Stand der Technik zu beseitigen. Insbesondere sollen ein simpler Aufbau mit einer geringeren Anzahl von Einzelteilen, eine einfachere Montage und eine erhöhte Wuchtgüte erreicht werden.

Diese und weitere Vorteile werden erreicht durch ein erfindungsgemässes Spannsystem zum Einspannen eines Werkzeughalters oder eines Werkstückhalters an einer um eine Längsachse antreibbaren Werkzeugspindel bzw. Werkstückspindel. Das Spannsystem enthält:
- mindestens zwei, zumindest teilweise in radialer Richtung bewegliche Spannsegmente zum Einspannen eines Werkzeugs bzw. Werkstücks an einer Welle der Werkzeugspindel bzw. der Werkstückspindel, wobei die Spannsegmente jeweils mindestens eine erste Spann- und Führungsfläche aufweisen,
- einen Zugbolzen mit mindestens einer, vorzugsweise mindestens zwei, ersten Gegenspannfläche(n), welche derart auf die ersten Spann- und Führungsflächen abgestimmt ist/sind, dass eine Bewegung des Zugbolzens entlang der Längsachse in einer Zugrichtung eine Bewegung der Spannsegmente in der radialen Richtung nach aussen bewirkt.

Erfindungsgemäss ist vorgesehen, dass die Spannsegmente jeweils eine zweite Spann- und Führungsfläche aufweisen und das Spannsystem eine Führungshülse mit mindestens einer, vorzugsweise mindestens zwei, sie in der radialen Richtung durchdringenden Öffnungen aufweist, durch welche die Spannsegmente zumindest in einer Spannstellung hindurchgreifen und welche mindestens eine, vorzugsweise mindestens zwei, Gegenspann- und Gegenführungsflächen definieren, welche derart auf die zweiten Spann- und Führungsflächen abgestimmt sind, dass sie die Spannsegmente parallel zur Längsachse einspannen, insbesondere in der Zugrichtung.

Diese erfindungsgemässe Ausgestaltung erlaubt einen simplen Aufbau, reduziert die Anzahl der benötigten Einzelteile, vereinfacht die Montage und bewirkt eine erhöhte Wuchtgüte.

Dass das Spannsegment parallel zur Längsachse eingespannt ist, ist hier und im Folgenden so zu verstehen, dass die Komponente der Spannkraft entlang einer zur Längsachse parallelen Achse von null verschieden ist.

Vorzugsweise sollen die Anzahl der ersten Gegenspannflächen und die Anzahl der Öffnungen der Anzahl der Spannsegmente entsprechen.

Vorzugsweise sind die erste Spann- und Führungsfläche und die erste Gegenspannfläche planar ausgebildet.

Zweckmässig ist es weiterhin, wenn die zweite Spann- und Führungsfläche und die Gegenspann- und Gegenführungsfläche entlang einer ersten Ebene E1 verlaufen, die unter einem ersten Führungswinkel β zur Längsachse verläuft. Der Führungswinkel β ist der grösstmögliche Winkel zwischen der ersten Ebene E1 und der Längsachse und liegt im Bereich von 90° bis 150°, bevorzugt im Bereich von 90° bis 120°, weiter bevorzugt im Bereich von 90° bis 110°.

Dies ermöglicht eine stabile Abstützung des Spannsegments entlang einer parallel zur Längsachse liegenden Achse. Insbesondere können die zweite Spann- und Führungsfläche und die Gegenspann- und Gegenführungsfläche senkrecht zur Längsachse verlaufen.

Vorteilhaft ist es ausserdem, wenn die Führungshülse entlang einer zur Längsachse parallel liegenden Achse an der Welle abgestützt ist, insbesondere in der Zugrichtung. Hierdurch wird die Führungshülse gegen Verschiebungen und/oder Verkippungen gesichert.

Der Zugbolzen kann an seiner Umfangsfläche eine Aussparung aufweisen, in welcher das Spannsegment zumindest in einer Lösestellung wenigstens teilweise aufgenommen ist. Dies sorgt dafür, dass das Spannsegment versenkt und der Werkzeughalter eingesetzt oder entnommen werden kann.

In einigen Ausführungsformen kann das Spannsegment eine insbesondere planare, erste Spann- und Führungsfläche aufweisen, und der Zugbolzen kann eine insbesondere planare Gegenführungsfläche aufweisen. Dabei kann eine entlang der Gegenführungsfläche verlaufende, zweite Ebene E2 gegenüber der Längsachse so um einen zweiten Führungswinkel δ geneigt sein, dass eine Bewegung des Zugbolzens in der Zugrichtung eine Bewegung des Spannsegments in der radialen Richtung nach aussen bewirkt. Der zweite Führungswinkel δ ist der kleinstmögliche Winkel zwischen der zweiten Ebene E2 und der Längsachse. Insbesondere kann der zweite Führungswinkel δ im Bereich zwischen grösser als 0° und bis zu 90°, bevorzugt zwischen grösser als 0° und bis zu 50°, noch bevorzugter im Bereich von 5° bis 30° liegen.

Sind eine derartige erste Spann- und Führungsfläche und eine derartige Gegenführungsfläche vorhanden, so kann eine dritte Ebene E3 entlang der ersten Gegenspannfläche unter einem Spannwinkel α zur Längsachse verlaufen. Der Spannwinkel α ist der kleinstmögliche Winkel zwischen der dritten Ebene E3 und der Längsachse und ist kleiner als der zweite Führungswinkel δ. Dies bewirkt, dass - wie in der Erläuterung eines Ausführungsbeispiels noch deutlicher wird - die Übersetzung der Längsbewegung des Zugbolzens in die Radialbewegung des Spannsegments beim Übergang von der Lösestellung zur Spannstellung zunächst grösser und dann kleiner ist. Alternativ ist es aber auch denkbar, dass der Spannwinkel α mit dem zweiten Führungswinkel δ übereinstimmt.

Von Vorteil ist es weiterhin, wenn das Spannsegment mindestens zwei seitliche Begrenzungsflächen aufweist und die Öffnung der Führungshülse mindestens eine, bevorzugt mindestens zwei, Gegenbegrenzungsflächen definieren, wobei die Begrenzungsflächen und die Gegenbegrenzungsflächen derart aufeinander abgestimmt sind, dass das Spannsegment zumindest in der Spannstellung gegen ein Herausfallen in radialer Richtung gesichert ist.

Der Quotient $\frac{arctan μ}{α}$ kann vorteilhafterweise grösser als 1 sein und bevorzugt im Bereich zwischen grösser als 1 und bis zu 9.9 weiter bevorzugt im Bereich zwischen grösser als 1 und bis zu 5, besonders bevorzugt im Bereich zwischen grösser als 1 und bis zu 2.3 liegen. Dabei bezeichnet µ den Haftreibungskoeffizienten zwischen dem Spannsegment und dem Zugbolzen. Diese Relation hat den Vorteil einer Selbsthemmung.

Das Spannsegment kann ferner eine Spannfläche aufweisen, an der das Spannsegment in der radialen Richtung an eine zweite Gegenspannfläche des Werkzeughalters bzw. des Werkstückhalters spannbar ist. Dabei kann die Spannfläche in einem grösseren radialen Abstand von der Längsachse angeordnet sein als die erste Spann- und Führungsfläche. Die Spannfläche ist bezüglich der Längsachse konisch ausgebildet.

Das Spannsystem kann mehrere Spannsegmente enthalten, die bevorzugt gleichmässig in Umfangsrichtung verteilt sind. Hierdurch kann eine gleichmässige Kraft- und Drehmomentverteilung erzielt werden.

Ein weiterer Aspekt der Erfindung betrifft ein Bearbeitungssystem, welches eine Werkzeugspindel und/oder eine Werkstückspindel sowie ein Spannsystem zum Einspannen eines Werkzeughalters an der Werkzeugspindel bzw. zum Einspannen eines Werkstückhalters an der Werkstückspindel, wie oben beschrieben, aufweist.

Das Bearbeitungssystem kann weiterhin einen Werkzeughalter und/oder einen Werkstückhalter enthalten, wobei das Spannsystem zum Einspannen des Werkzeughalters an der Werkzeugspindel bzw. zum Einspannen des Werkstückhalters an der Werkstückspindel ausgebildet ist.

Ebenfalls kann der Zugbolzen und/oder die Führungshülse an seiner/ihrer Aussenseite eine Verdrehsicherung aufweisen, wie beispielsweise eine Vierkantgeometrie. Dies hat den Vorteil, dass bei einer ungeraden Anzahl der Spannsegmente nur eine mögliche Montageposition vorhanden ist, was das Risiko einer Fehlmontage reduziert.

Nachfolgend wird die Erfindung anhand einiger Ausführungsbeispiele näher erläutert. Dabei zeigen
- Figur 1:: ein erfindungsgemässes Spannsystem in einer ersten Schnittansicht;
- Figur 2:: einen Zugbolzen, eine Führungshülse und Spannsegmente des Spannsystems in einer perspektivischen Ansicht;
- Figur 3:: den Zugbolzen des Spannsystems in einer perspektivischen Ansicht;
- Figur 4:: das Spannsystem in einer Seitenansicht;
- Figur 5:: das Spannsystem in einer zweiten Schnittansicht;
- Figur 6a:: eines der Spannsegmente des Spannsystems in einer Schnittansicht;
- Figur 6b:: eines der Spannsegmente in vergrösserter Detailansicht des Spannsystems in der ersten Schnittansicht;
- Figur 7a:: das Spannsystem in einer Lösestellung in einer Schnittansicht;
- Figur 7b:: das Spannsystem in einer Spannstellung in einer Schnittansicht.

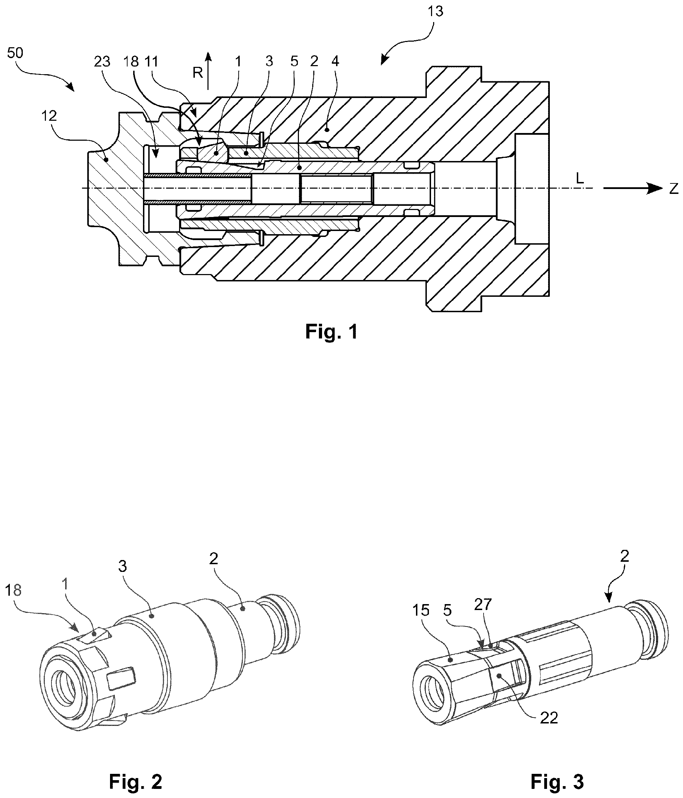

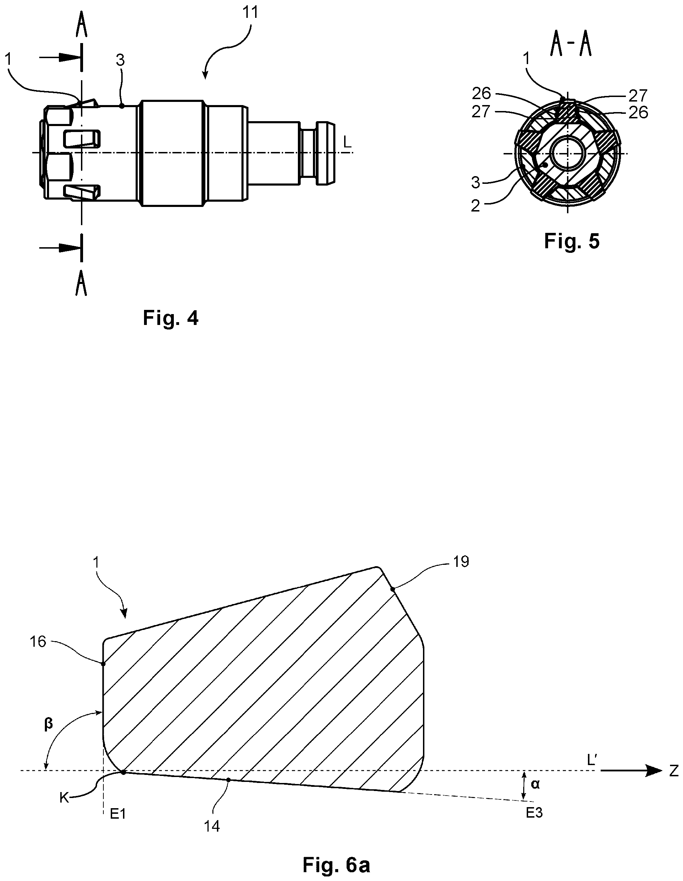

Figur 1 zeigt ein Ausführungsbeispiel eines erfindungsgemässen Spannsystems 11 zum Einspannen eines Werkzeughalters 12 an einer um eine Längsachse L antreibbaren Werkzeugspindel 13. Das Spannsystem 11 ist Teil eines Bearbeitungssystems 50. Der Werkzeughalter 12 bildet mit dem Spannsystem 11 einen Hohlraum 23. Das Spannsystem 11 enthält einen Zugbolzen 2 und eine Führungshülse 3. Der Zugbolzen 2 verfügt an seiner Umfangsfläche über Aussparungen 5. Die Führungshülse 3 ist in einer Zugrichtung Z an einer Welle 4 der Werkzeugspindel 13 abgestützt. Sie verfügt über fünf sie in radialer Richtung R durchdringende Öffnungen 18, die in Umfangsrichtung gleichmässig verteilt sind (siehe Fig. 5). Ferner enthält das Spannsystem 11 fünf gleichmässig in Umfangsrichtung verteilte und in radialer Richtung R bewegliche Spannsegmente 1. Die Spannsegmente 1 dienen zum Einspannen des Werkzeughalters 12 eines hier nicht insgesamt dargestellten Werkzeugs an der Welle 4 der Werkzeugspindel 13, wie weiter unten noch detaillierter erläutert wird.

Figur 2 zeigt die Führungshülse 3 mit dem Zugbolzen 2. Die in Umfangsrichtung gleichmässig verteilten Öffnungen 18 werden von je einem Spannsegment 1 durchdrungen.

In Figur 3 sind Gegenbegrenzungsflächen 27, Gegenführungsflächen 22 und planare, erste Gegenspannflächen 15 gezeigt. Die Aussparungen 5 des Zugbolzens 2 sind an der Umfangsfläche dessen angeordnet.

Figur 4 zeigt das Spannsystem 11 mit Führungshülse 3 und Spannsegmenten 1 und die dazugehörige Längsachse L. Senkrecht zur Längsachse L verläuft die eine Schnittebene, die durch eine Schnittlinie markiert wird. Pfeile zeigen die Blickrichtung auf die Schnittebene an, wie sie in Figur 5 verwirklicht ist.

Figur 5 zeigt eine Schnittansicht entsprechend einer Schnittebene, die in Figur 4 durch eine Schnittlinie markiert wird. Darin ist gezeigt, wie das Aufliegen von Begrenzungsfläche 26 des Spannsegments 1 auf der Gegenbegrenzungsfläche 27 des Zugbolzens 2 ein Herausfallen des zumindest teilweise in die Führungshülse 3 hineinragenden Spannsegments 1 in radialer Richtung verhindert.

Figur 6a lässt erkennen, dass das Spannsegment 1 eine planare, erste Spann- und Führungsfläche 14 aufweist. Eine erste Ebene E1 entlang der zweiten Spann- und Führungsfläche 16 verläuft zu einer zur Längsachse L parallelen, auf der in Figur 1 gezeigten Schnittebene verlaufenden Achse L' unter einem Führungswinkel β. Der Führungswinkel β ist der grösstmögliche Winkel zwischen der ersten Ebene E1 und der Achse L' und beträgt in diesem Ausführungsbeispiel 90°. Eine dritte Ebene E3 entlang der ersten Spann- und Führungsfläche 14 verläuft in einer Spannstellung entlang der Achse L' unter einem Spannwinkel α. Der Spannwinkel α ist der kleinstmögliche Winkel zwischen der dritten Ebene E3 und der Achse L' und beträgt in diesem Ausführungsbeispiel 4°. Jedes Spannsegment 1 weist zudem eine konische Spannfläche 19 auf, mit der das Spannsegment 1 in der radialen Richtung R an den Werkzeughalter 12 (siehe Fig. 1) gespannt ist. Die Spannfläche 19 ist bei bestimmungsgemässem Gebrauch in einem grösseren radialen Abstand von der Längsachse L (siehe Fig. 1) angeordnet als die erste Spann- und Führungsfläche 14.

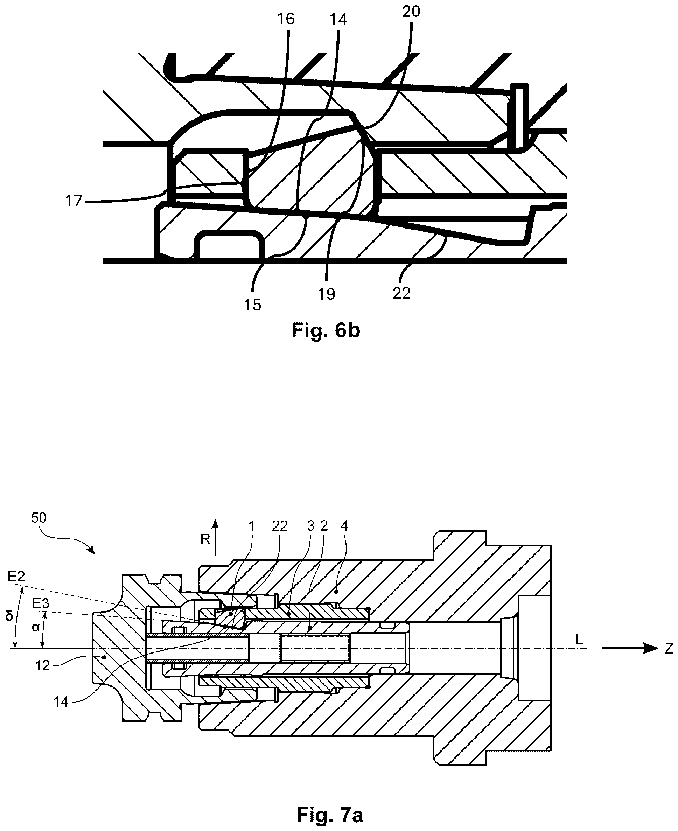

Figur 6b gibt einen Überblick über die Flächen am Spannsegment und die umliegend angeordneten Gegenflächen. Das gezeigte Spannsegment weist die erste Spann- und Führungsfläche 14, die zweite Spann- und Führungsfläche 16 und die Spannfläche 19 auf. Die erste Gegenspannfläche 15 und die erste Gegenführungsfläche 22 sind auf dem Zugbolzen 2 ausgebildet (siehe Fig. 1). Die Gegenspann- und Gegenführungsfläche ist an den Aussparungen 5 der Führungshülse 3 ausgebildet (siehe Fig. 1). Eine zweite Gegenspannfläche 20 auf dem Werkzeughalter ausgebildet (siehe Fig. 1).

In Figur 7a ist gezeigt, wie die Gegenführungsfläche 22 des Zugbolzens 2 derart auf die erste Spann- und Führungsfläche 14 (siehe Fig. 6a) des Spannsegments 1 abgestimmt ist, dass eine Bewegung des Zugbolzens 2 entlang der Längsachse L in Zugrichtung Z eine Bewegung des Spannsegments 1 in der radialen Richtung R unter einem zweiten Führungswinkel δ nach aussen bewirkt. Der zweite Führungswinkel δ ist der kleinstmögliche Winkel, der durch die zweite Ebene E2, die entlang der Gegenführungsfläche 22 verläuft, und die Längsachse L gebildet wird. In diesem Ausführungsbeispiel beträgt der zweite Führungswinkel 7° und ist damit grösser als der Spannwinkel α.

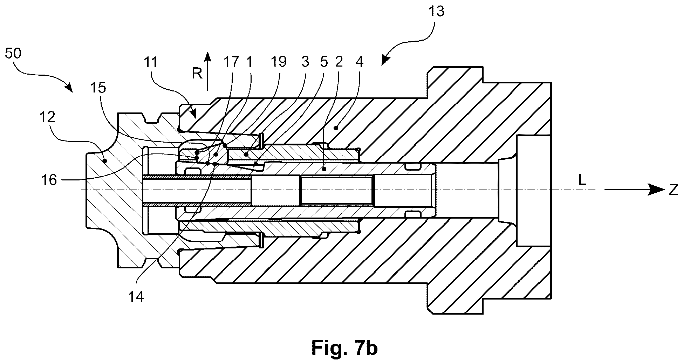

Beim Übergang von der in Figur 7a dargestellten Lösestellung, in die in Figur 7b gezeigte Spannstellung, bewirkt eine Bewegung des Zugbolzens 2 in Zugrichtung Z zunächst, dass sich die Spannsegmente 1 aufgrund des Kontakts der ersten Spann- und Führungsflächen 14 mit den Gegenführungsflächen 22 in radialer Richtung R nach aussen bewegen. Dabei werden die Spannsegmente 1 aufgrund des Kontakts der zweiten Spann- und Führungsflächen 16 mit den Gegenspann- und Gegenführungsflächen 17 in Längsrichtung L abgestützt.

In einer nicht gezeigten Mittelstellung entsteht ein Kontakt zwischen den ersten Spann- und Führungsflächen 14 und den ersten Gegenspannflächen 15. Hierdurch werden die Spannsegmente 1 weiter in radialer Richtung R nach aussen bewegt, und zwar mit einer geringeren Übersetzung. Schliesslich geraten die Spannflächen 19 in Kontakt mit den zweiten Gegenspannflächen 20 auf dem Werkzeughalter 12. Eine weitere Bewegung des Zugbolzens 2 in Zugrichtung Z bewirkt, dass der Werkzeughalter 12 in Zugrichtung Z bewegt wird und seine konische Aussenfläche in der konischen Innenfläche der Welle 4 eingeklemmt wird, wobei die Spannstellung S erreicht wird. Der Quotient $\frac{arctan μ}{α}$ ist grösser als 1 und beträgt in dem gezeigten Ausführungsbeispiel 2.1. Dabei ist µ der Haftreibungskoeffizient zwischen dem Spannsegment 1 und dem Zugbolzen 2 und beträgt in diesem Ausführungsbeispiel 0.15. Auf diese Weise wird eine Selbsthemmung erreicht, sobald die endgültige Spannstellung erreicht wird. Der Zugbolzen 2 verfügt an seiner Umfangsfläche 20 über Aussparungen 5, in welcher die Spannsegmente 1 in einer in Figur 7a gezeigten Lösestellung wenigstens teilweise aufgenommen sind.

## Patentansprüche

1. Spannsystem (11) zum Einspannen eines Werkzeughalters (12) oder eines Werkstückhalters an einer um eine Längsachse (L) antreibbaren Werkzeugspindel (13) bzw. Werkstückspindel, enthaltend
- mindestens zwei, zumindest teilweise in radialer Richtung (R) bewegliche Spannsegmente (1) zum Einspannen eines Werkzeugs bzw. Werkstücks an einer Welle (4) der Werkzeugspindel (13) bzw. der Werkstückspindel, wobei die Spannsegmente (1) jeweils mindestens eine erste Spann- und Führungsfläche (14) aufweisen,
- einen Zugbolzen (2) mit mindestens einer, vorzugsweise mindestens zwei, ersten Gegenspannfläche(n) (15), welche derart auf die ersten Spann- und Führungsflächen (14) abgestimmt ist/sind, dass eine Bewegung des Zugbolzens (2) entlang der Längsachse (L) in einer Zugrichtung (Z) eine Bewegung der Spannsegmente (1) in der radialen Richtung (R) nach aussen bewirkt,
**dadurch gekennzeichnet, dass**
die Spannsegmente (1) jeweils eine zweite Spann- und Führungsfläche (16) aufweisen und das Spannsystem (11) eine Führungshülse (3) mit mindestes einer, vorzugsweise mindestens zwei, sie in der radialen Richtung (R) durchdringenden Öffnungen (18) aufweist, durch welche die Spannsegmente (1) zumindest in einer Spannstellung hindurchgreifen und welche mindestens eine, vorzugsweise mindestens zwei, Gegenspann- und Gegenführungsflächen (17) definieren, welche derart auf die zweiten Spann- und Führungsflächen (16) abgestimmt sind, dass sie die Spannsegmente (1) parallel zur Längsachse (L) einspannen, insbesondere in der Zugrichtung (Z).

2. Spannsystem (11) gemäss Anspruch 1, wobei die erste Spann- und Führungsfläche (14) und die erste Gegenspannfläche (15) planar ausgebildet sind.

3. Spannsystem (11) gemäss einem der vorangehenden Ansprüche, wobei die zweite Spann- und Führungsfläche (16) und die Gegenspann- und Gegenführungsfläche (17) entlang einer ersten Ebene (E1) verlaufen, die unter einem ersten Führungswinkel (β) zur Längsachse (L) verläuft, wobei der erste Führungswinkel (β) der grösstmögliche Winkel zwischen der ersten Ebene (E1) und der Längsachse (L) ist und im Bereich von 90° bis 150°, bevorzugt im Bereich von 90° bis 120°, noch bevorzugter im Bereich von 90° bis 110° liegt.

4. Spannsystem (11) gemäss einem der vorangehenden Ansprüche, wobei die Führungshülse (3) entlang einer zur Längsachse (L) parallel liegenden Achse an der Welle (4) abgestützt ist, insbesondere in der Zugrichtung (Z).

5. Spannsystem (11) gemäss einem der vorangehenden Ansprüche, wobei der Zugbolzen (2) an seiner Umfangsfläche eine Aussparung (5) aufweist, in welcher das Spannsegment (1) zumindest in einer Lösestellung wenigstens teilweise aufgenommen ist.

6. Spannsystem (11) gemäss einem der vorangehenden Ansprüche, wobei das Spannsegment (1) eine insbesondere planare, erste Spann- und Führungsfläche (14) aufweist und der Zugbolzen (2) eine insbesondere planare Gegenführungsfläche (22) aufweist, wobei eine entlang der Gegenführungsfläche (22) verlaufende, zweite Ebene (E2) derart gegenüber der Längsachse (L) um einen zweiten Führungswinkel (δ) geneigt sind, dass eine Bewegung des Zugbolzens (2) in der Zugrichtung (Z) eine Bewegung des Spannsegments (1) in der radialen Richtung (R) nach aussen bewirkt, wobei der zweite Führungswinkel (δ) der kleinstmögliche Winkel zwischen der zweiten Ebene (E2) und der Längsachse ist und insbesondere im Bereich zwischen grösser als 0° und bis zu 90°, bevorzugt zwischen grösser als 0° und bis zu 50°, noch bevorzugter im Bereich von 5° bis 30° liegt.

7. Spannsystem (11) gemäss Anspruch 6 wobei eine entlang der der ersten Gegenspannfläche (15) dritte Ebene (E3) unter einem Spannwinkel (α) zur Längsachse (L) verläuft, wobei der Spannwinkel (α) der kleinstmögliche Winkel zwischen der dritten Ebene (E3) und der Längsachse ist und bevorzugt kleiner ist als der zweite Führungswinkel (δ).

8. Spannsystem (11) gemäss einem der vorangehenden Ansprüche, wobei das Spannsegment (1) mindestens zwei seitliche Begrenzungsflächen (26) aufweist und die Öffnung (18) der Führungshülse (3) mindestens eine, bevorzugt mindestens zwei, Gegenbegrenzungsflächen (27) definiert, wobei die Begrenzungsflächen (26) und die
Gegenbegrenzungsflächen (27) derart aufeinander abgestimmt sind, dass das Spannsegment (1) zumindest in der Lösestellung gegen ein Herausfallen in radialer Richtung (R) gesichert ist.

9. Spannsystem (11) gemäss einem der vorangehenden Ansprüche, wobei die erste Spann- und Führungsfläche (14) und die erste Gegenspannfläche (15) unter einem Spannwinkel (α) zur Längsachse (L) verlaufen, wobei der Quotient $\frac{arctan μ}{α}$ grösser als 1 ist und bevorzugt im Bereich zwischen grösser als 1 und bis zu 9.9, weiter bevorzugt im Bereich zwischen grösser als 1 und bis zu 5, besonders bevorzugt im Bereich zwischen grösser als 1 und bis zu 2.3 liegt, wobei µ den Haftreibungskoeffizienten zwischen dem Spannsegment (1) und dem Zugbolzen (2) bezeichnet.

10. Spannsystem (11) gemäss einem der vorangehenden Ansprüche, wobei das Spannsegment (1) eine Spannfläche (19) aufweist, an der das Spannsegment (1) in der radialen Richtung (R) an eine zweite Gegenspannfläche (20) des Werkzeughalters (12) bzw. des Werkstückhalters spannbar ist, wobei die Spannfläche (19) insbesondere in einem grösseren radialen Abstand von der Längsachse (L) angeordnet ist als die erste Spann- und Führungsfläche (14).

11. Spannsystem (11) gemäss Anspruch 10, wobei die Spannfläche (19) bezüglich der Längsachse (L) konisch ausgebildet ist.

12. Spannsystem (11) gemäss einem der vorangehenden Ansprüche, wobei das Spannsystem (11) mehrere Spannsegmente (1) enthält, die bevorzugt gleichmässig in Umfangsrichtung verteilt sind.

13. Spannsystem (11) gemäss einem der vorangehenden Ansprüche, wobei der Zugbolzen (2) und/oder die Führungshülse (3) an seiner/ihrer Aussenseite eine Verdrehsicherung aufweist/aufweisen.

14. Bearbeitungssystem (50), enthaltend eine
Werkzeugspindel (13) und/oder eine Werkstückspindel sowie ein Spannsystem (11) nach einem der vorangehenden Ansprüche zum Einspannen eines Werkzeughalters (12) an der Werkzeugspindel (13) bzw. zum Einspannen eines Werkstückhalters an der Werkstückspindel.

15. Bearbeitungssystem (13) gemäss Anspruch 14 weiterhin enthaltend einen Werkzeughalter (12) und/oder einen Werkstückhalter, wobei das Spannsystem (11) zum Einspannen des Werkzeughalters (12) an der Werkzeugspindel (13) bzw.
zum Einspannen des Werkstückhalters an der Werkstückspindel ausgebildet ist.
